# EUROPÄISCHE PATENTSCHRIFT

(11) **EP 4 031 471 B1**
(45) Veröffentlichungstag und Bekanntmachung des Hinweises auf die Patenterteilung: **22.05.2024**
(21) Anmeldenummer: 20780116.8
(22) Anmeldetag: 18.09.2020
(51) Int. Cl.: B65G 27/32, B07C 5/02, B23B 31/107, B65G 47/90

(54) **VERFAHREN ZUM FÖRDERN VON SCHÜTTGUT-TEILEN SOWIE EIN GERÄT ZUR DURCHFÜHRUNG DES VERFAHRENS**
METHOD FOR CONVEYING BULK MATERIALS, AND DEVICE FOR CARRYING OUT THE METHOD
PROCÉDÉ POUR TRANSPORTER DES ÉLÉMENTS DE PRODUIT EN VRAC ET APPAREIL SERVANT À LA MISE EN OEUVRE DE CE PROCÉDÉ

(30) Priorität: 18.09.2019 CH 11932019
(43) Veröffentlichungstag der Anmeldung: 27.07.2022
(73) Patentinhaber: Frauenfelder, Martin, 3006 Bern (CH)
(72) Erfinder: Frauenfelder, Martin, 3006 Bern (CH)
(74) Vertreter: Luchs, Willi
(86) Internationale Anmeldenummer: PCT/EP2020/076163
(87) Internationale Veröffentlichungsnummer: WO 2021/053176

(56) Entgegenhaltungen:
- EP-A1- 2 982 618
- WO-A1-2016/167659
- WO-A1-2019/114895
- CN-A- 108 421 723
- DE-A1-102015 204 501
- DE-U1-202012 101 833

## Beschreibung

Die Erfindung betrifft ein Verfahren zum Fördern von Schüttgut-Teilen nach dem Oberbegriff des Anspruchs 1, sowie ein Gerät zur Durchführung des Verfahrens nach Anspruch 7.

Bei einem Verfahren gemäss der Druckschrift EP-A-1 513 749 zum Zuführen von Schüttgutteilen werden diese aus einer in einem Speicher mehrfach übereinander angeordneten Schüttgutteile in eine individuell verteilte und entwirrte Lage in Griffweite eines Roboters befördert. Bei einer Vorrichtung ist eine horizontal angeordnete Schwingförderfläche mit Mitteln zum Vorschub oder Rückzug der Schüttgutteile in x- bzw. y-Richtung und zudem mit Mitteln zum Anregen einer Schwingung der Schwingförderfläche in z- Richtung vorgesehen. Eine Kamera und ein Sensor sind zum individuellen Erfassen der Anzahl, Lage und Ausrichtung der vereinzelten Schüttgutteile vorhanden. Ein Prozessor dient zur Verarbeitung der Sensorsignale und zur Generierung von Steuerbefehlen, mitunter von einer Schwingbewegung in z- Richtung mit in x- Richtung kontinuierlich zunehmender, programmierbaren Amplituden. Die Schwingbewegung in z- Richtung erfolgt alternierend oder wenigstens teilweise gleichzeitig und koordiniert mit einer Vorschub- oder Rückzugsförderung der Schüttgutteile in x- oder in x- und y- Richtung. Zumindest für eine Momentaufnahme durch die Kamera bis zur Entnahme von Schüttgutteilen durch den Roboter werden alle Bewegungen der Schwingförderfläche gestoppt, um die Positionen der Teile zu erfassen.

Mit diesem Verfahren können Schüttgutteile in verschiedenen Richtungen bewegt und auf der Schwingförderfläche entwirrt und individuell verteilt werden, so dass sie von einem Roboter einzeln gefasst und auf einem separaten Stelle abgelegt werden können. Dieses Verfahren und die für dieses verwendete Vorrichtung sind aber relativ aufwändig in der Handhabung und zudem sind sie nicht sonderlich leistungsfähig mit der Fördermenge.

In der Druckschrift WO 2016/167659 A1 ist ein Verfahren und eine Vorrichtung zum Säen von Samen offenbart, welche eine Trennvorrichtung zum Distanzieren von einzelnen Samen relativ zu einem Rest der Vielzahl von Samen umfasst, die ein optisches Erkennungssystem zum Erkennen der getrennten Samen zueinander, eine Robotervorrichtung zum Aufnehmen der getrennten Samen und zum Aussäen des Samens, und eine Steuereinheit zum Steuern der Trennvorrichtung, des optischen Erkennungssystems und der Robotervorrichtung aufweist. Der Trennvorrichtung ist eine Vibrationsplatte zugeordnet, auf welche die Samen mittels der Robotervorrichtung drauf geschüttet werden, welche durch Vibration ein Separieren der Samen zueinander bewirkt, die zuvor aufeinander oder unmittelbar nebeneinander liegen. Diese Vibrationsplatte kann mit drei oder mehr Aktuatoren verbunden sein, welche die Platte in verschiedene Richtungen bewegen oder rotieren können.

Im Dokument EP 2 982 618 A1 ist ein Schwingförderer zur zweidimensionalen Bewegung von Objekten offenbart, die eine Schwingplatte, auf deren Förderoberfläche wenigstens ein Objekt durch Schwingungen der Schwingplatte bewegbar ist, sowie wenigstens zwei Anregungselemente zur Anregung von Schwingungen der Schwingplatte, wobei die Anregungselemente an voneinander beabstandeten Anregungspositionen mit der Schwingplatte gekoppelte Ultraschallwandler sind, durch dieselben die Schwingplatte an der jeweiligen Anregungsposition in Abhängigkeit eines jeweils separat durch eine Steuereinrichtung an das jeweilige Anregungselement bereitstellbaren jeweiligen Steuersignals zur Schwingung anregbar ist. Durch einen zusätzlichen Aktuator kann die Schwingplatte durch eine Positionsänderung senkrecht zur Förderrichtung bewegt werden und dabei die Objekte die Förderoberfläche kurzfristig verlassen, so dass ihre Auflagefläche verändert werden kann.

Bei einer Sortiermaschine gemäss der Druckschrift CN 108421723 sind eine Steuerung, eine Bandfördereinrichtung, eine Vibrationsaustrags- und Sortiereinrichtung und eine Begrenzungsförderkette in Förderrichtung eines Waageblocks hintereinander angeordnet. Die Vibrationsaustragseinrichtung ist mit einem Vibrationsmotor beim Förderband mit seitlichen Leitblechen und einer nachfolgenden Zuführrinne der einzelnen Objekte versehen.

Gemäss der Druckschrift WO 2019/114895 A1 ist eine Vorrichtung zum Koppeln mit einem Roboter offenbart, bei der eine erste mit dem Roboter verbindbare Komponente sowie eine mit dieser koppelbare zweite Komponente mit einer Haltevorrichtung für Gegenstände vorhanden ist. Diese erste Komponente ist jeweils durch Verbindungselemente an der zweiten mechanisch arretierbar, die im gekuppelten Zustand ein Lösen der Komponenten voneinander verhindern. Den Komponenten sind ausserdem Verbindungsteile für einen Anschluss eines Mediums via Schläuche oder Kabel zugeordnet, die mit Saugnäpfen bei der Haltevorrichtung verbunden sind und mittels denen ein Gegenstand lösbar gehalten werden kann.

Der Erfindung liegt demgegenüber die Aufgabe zugrunde, ein Verfahren und ein Gerät nach der eingangs erwähnten Gattung derart weiterzuentwickeln, dass mit ihm bei einer verhältnismässig einfachen und kompakten Konstruktion ein effizienteres und produktiveres Fördern der Schüttgut-Teile ermöglicht wird.

Diese Aufgabe ist erfindungsgemäss durch ein Verfahren nach den Merkmalen des Anspruchs 1 bzw. durch ein Gerät nach den Merkmalen des Anspruchs 7 gelöst.

Mit diesem erfindungsgemässen Verfahren, das Plattenelement zumindest quer zu seiner Auflagefläche für die Schüttgut-Teile durch wenigstens zwei aufeinanderfolgende Impulse auf und ab zu bewegen, so dass die auf dem Plattenelement befindlichen Schüttgut-Teile beim jeweiligen Impuls von diesem kurzzeitig abgehoben werden, kann eine schnelle und wirksame Einzelauflage der Teile auf dem Plattenelement herbeigeführt werden, so dass diese einfach geortet und ihre Lage auf dem Plattenelement leicht und sicher erfasst werden können. Anschliessend kann der Manipulator entsprechend angesteuert und sein Greifer die Teile fassen und an eine bestimmte Position neben dem Gerät ablegen.

Es hat sich überraschend herausgestellt, dass ein Verteilen der Schüttgut-Teile auf dem Plattenelement für ihre Ortung äusserst schnell und sicher erzielt werden kann, wenn insbesondere zwei aufeinanderfolgende Impulse initiiert werden und dabei das Zeitintervall zwischen den beiden Impulsen so gewählt wird, dass die Schüttgut-Teile unmittelbar nach dem ersten Impuls beim Auftreffen auf dem Plattenelement durch den zweiten Impuls wieder von diesem abgehoben werden.

Sehr vorteilhaft ist das Plattenelement zumindest transparent durchsichtig gefertigt, so dass die Aussenkonturen der oberhalb vom Plattenelement liegenden Schüttgut-Teile nach den erfolgten Impulsen unterseitig fotografisch erfasst werden können, daraus die x- und y-Koordinaten der jeweiligen Positionen sowie die Ausrichtung derselben bestimmt und für einen Greifer des Manipulators als Positionswerte dienen. Auf diese Weise kann eine Kamera, ein Zeilenscanner oder dergleichen in dem erfindungsgemässen Gerät sehr platzsparend integriert und die jeweiligen Positionen der Teile einfach erfasst werden.

Zweckmässigerweise werden die Impulsbewegungen auf das Plattenelement durch wenigstens einen elektromagnetisch wirkenden Verstellmechanismus erzeugt, bei dem der Verstellhub ca. 0.1 bis einige Millimeter beträgt und dies bei einer jeweiligen Impulszeitdauer von Sekundenbruchteilen erfolgt.

Die Erfindung sowie weitere Vorteile derselben sind nachfolgend anhand von Ausführungsbeispielen unter Bezugnahme auf die Zeichnung näher erläutert. Es zeigt:
- Fig. 1: ein erfindungsgemässes Gerät in perspektivischer Ansicht mit einem Längsschnitt seines Gehäuses;
- Fig. 2: bis Fig. 6 jeweils ein Prinzipschema des erfindungsgemässen Gerätes mit den einzelnen Schritten des Verfahrens der Förderung der Schüttgut-Teile;

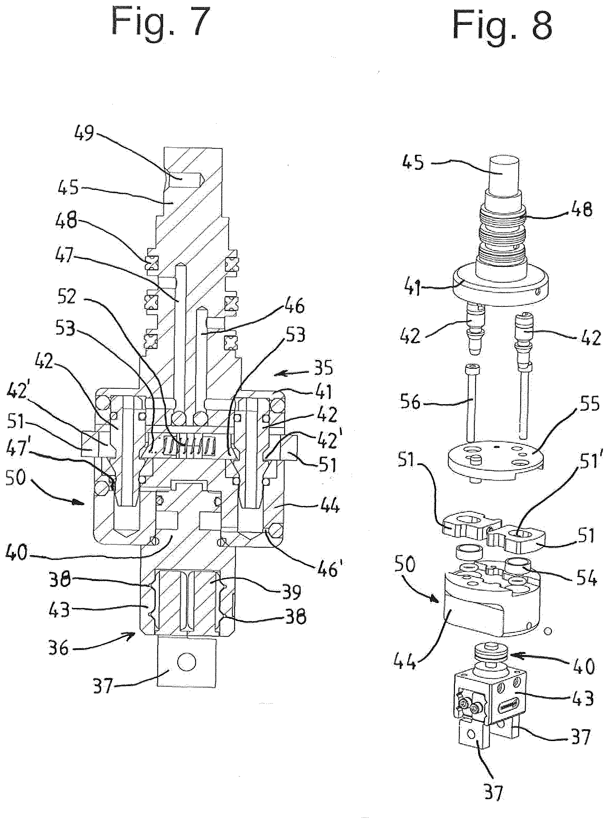

- Fig. 7: einen Längsschnitt eines Greifers für das erfindungsgemässe Gerät nach Fig. 1; und
- Fig. 8: eine perspektivische Explosionsansicht des Greifers nach Fig. 7.

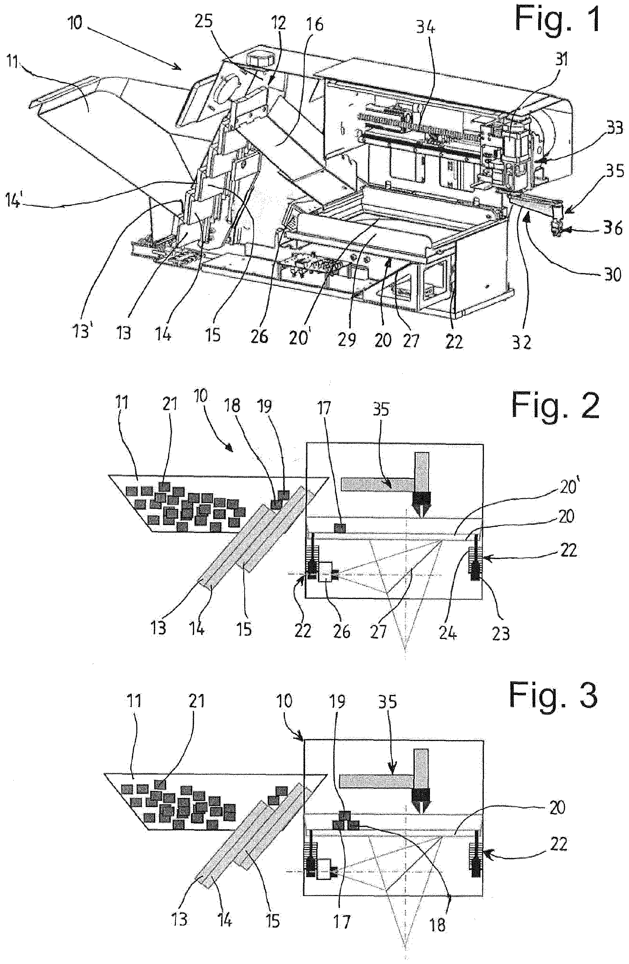

Das in Fig. 1 gezeigte Gerät 10 ist mit einem seitlich zugänglichen Einfüllbehälter 11 für die Aufnahme von Schüttgut versehen. Bei dem Schüttgut kann es sich um verschiedenartige Teile handeln, wie zum Beispiel um Zulieferteile für die automatisierte Montage von Maschinen, Geräten, Maschinenkomponenten oder ähnlichem, oder um Teile, die in Bearbeitungsmaschinen, wie Stanz-, Fräs-, Bohr- oder ähnliche Maschinen zu- oder weggeführt werden. So können bei einem Rundtaktautomaten fortwährend geleerte Nester wieder mit solchen Teilen gespeist werden. Es kann sich im Prinzip ebenso um Teile für Verpackungsmaschinen handeln, wie zum Beispiel im Lebensmittel-, Medizin-, Pharmaziebereich oder dergleichen. Es sind auch Anwendungen bei Beschickungen von Bearbeitungsmaschinen, wie Spritzgiessmaschinen, möglich.

Dieses Gerät 10 umfasst ein mehrteiliges Gehäuse 25, diesen Einfüllbehälter 11, eine mit diesem zusammenwirkende Fördereinrichtung 12, ein Plattenelement 20, wenigstens einen Manipulator 30 mit einem oberhalb des Plattenelementes 20 verstellbaren Greifer 35 mit einem Schwenkarm 32 sowie eine nicht näher gezeigte elektronische Steuerung für ein automatisiertes Fördern des Schüttgutes im Gerät.

Beim gezeigten Ausführungsbeispiel ist diese Fördereinrichtung 12 durch einen Plattenförderer realisiert, dem mehrere schräg nach oben verlaufende Platten 13, 14, 15, 13', 14' zugeordnet sind, die mit ihren Seitenflächen abgestuft parallel zueinander angeordnet sind. Diese Platten 13, 14, 15 können unabhängig voneinander in ihrer Längserstreckung oszillierend auf- und abbewegt werden und sie ermöglichen dabei ein stufenweises dosiertes Fördern von Schüttgut-Teilen auf ihren Oberseiten vom Einfüllbehälter 11 bis zum Überlauf und einer schräg nach unten führenden Rampe 16, die sich bis auf die Oberseite des Plattenelementes 20 erstreckt.

Ein solcher Plattenförderer ist an sich bekannt und es ist daher nicht mehr näher darauf eingegangen. Dieser bietet den Vorteil, dass durch seine Anordnung mit dieser Stufenförderung Platz gespart wird und das Gerät 10 entsprechend kompakter gebaut werden kann und ausserdem können die Schüttgut-Teile 21 vom Einfüllbehälter 11 schnell und einzeln oder in kleiner Anzahl getaktet zugeführt werden. Die Schräge der Platten 13, 14, 15, 13', 14' kann ferner noch je nach Form und Grösse der Teile optimal eingestellt werden.

Gemäss Fig. 2 und Fig. 3 werden diese Schüttgut-Teile 17, 18, 19 via diese Rampe 16 nacheinander zugeführt und sie liegen üblicherweise ohne gezielte Ausrichtung neben- und aufeinander auf dem Plattenelement 20.

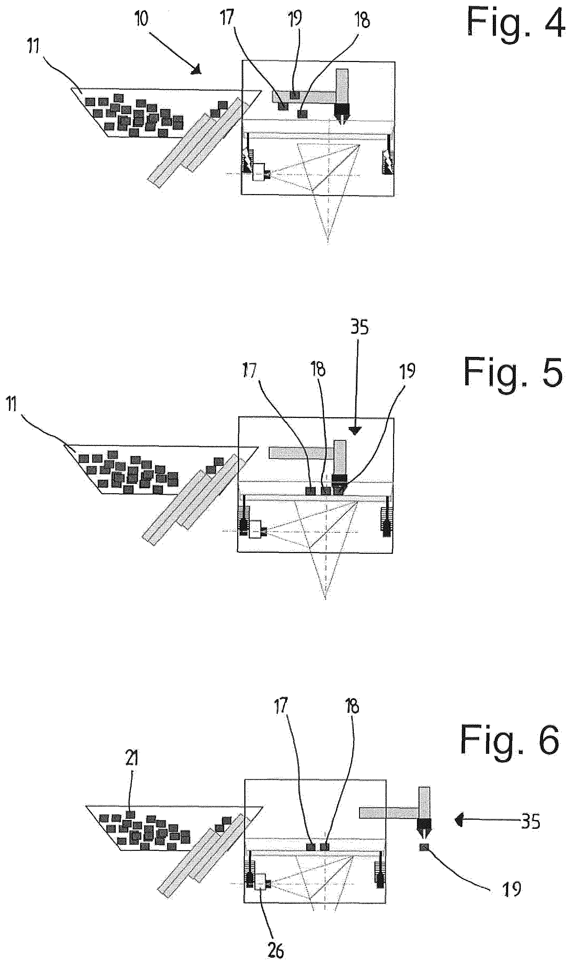

Mit dem erfindungsgemässen Verfahren wird das Plattenelement 20 gemäss Fig. 4 zumindest quer zu seiner Auflagefläche 20' durch wenigstens einen, vorzugsweise durch zwei aufeinanderfolgende Impulse auf- und abbewegt, so dass die auf dem Plattenelement 20 befindlichen Schüttgut-Teile 17, 18, 19 beim jeweiligen Impuls von diesem kurzzeitig abgehoben werden, wie dies schematisch ersichtlich ist.

Sehr vorteilhaft wird bei zumindest zwei aufeinanderfolgenden Impulsen ein solches Zeitintervall zwischen den beiden Impulsen gewählt, dass die Schüttgut-Teile 17, 18, 19 unmittelbar nach dem ersten Impuls beim Auftreffen auf dem Plattenelement 20 durch den zweiten Impuls wieder von diesem abgehoben werden.

Mit einem solchen Steuern der impulsartigen Auf- und Abbewegungen des Plattenelementes 20 kann innerhalb von sehr kurzer Zeit von weniger als einer Sekunde eine verlässliche Ausrichtung der Teile 17, 18, 19, wie in Fig. 5 dargestellt ist, erzielt werden.

Der Hub und die Impulszeitdauer der Bewegungen des Plattenelementes 20 bei einem jeweiligen Impuls werden in Abhängigkeit zumindest des Gewichtes und vorzugsweise der Aussenform der Schüttgut-Teile 17, 18, 19 festgelegt.

Die Einstellung und das Ausführen der Impulsbewegungen des Plattenelementes 20 erfolgt durch eine elektronische Steuerung, die vorzugsweise als Prozessor in einem im Gerät 10 integrierten Computer mit einem Display und Tastatur mit einem geeigneten Software-Programm bewerkstelligt ist. Mit dieser Steuerung können die notwendigen Parameter eingegeben und die Schüttgut-Teile vollautomatisch zu der richtigen Ablageposition ausserhalb des Gerätes geführt werden, wie dies in Fig. 6 mit dem durch den Greifer 35 abgelegten Teil 19 veranschaulicht ist.

Die Erzeugung der einen bzw. vorzugsweise der zwei Impulsbewegungen erfolgt durch einen elektromagnetisch wirkenden Verstellmechanismus 22, bei dem der Verstellhub ca. 0.1 bis einige Millimeter beträgt und dies bei einer jeweiligen Impulszeitdauer von Sekundenbruchteilen getaktet ist.

Das Plattenelement 20 ist bei ihren vier Ecken auf jeweils einem Verstellmechanismus 22 abgestützt, welcher aus je einem aussenseitig das Plattenelement 20 geführten Hubbolzen 23 und einer diesen umgebenden Magnetspule 24, welche durch elektrischen Strom beaufschlagt wird, um das Plattenelement 20 impulsartig mit einem Hub quer zu seiner Auflagefläche 20' hochzubewegen, das sich dann anschliessend bei Abschalten der Stromzufuhr durch sein Eigengewicht wieder nach unten in die Ausgangsstellung absenkt. Der jeweilige Verstellmechanismus 22 ist mit der elektronischen Steuerung für die Einstellung und das Ausführen der Impulsbewegungen verbunden. Vorteilhaft stösst der Hubbolzen 23 nach dem Beschleunigen nach oben an einen oberen Anschlag, so dass er und damit das Plattenelement 20 ruckartig stoppt und damit das Abheben der Teile zusätzlich begünstigt.

Es wird damit bezweckt, dass die Schüttgut-Teile 17, 18, 19 nach dem durch die Impulse bewirkten kurzzeitigen Abheben neben- und nicht aufeinander auf dem Plattenelement 20 liegen. Es ist ausserdem noch ein Rahmen 29 über dem Plattenelement 20 angeordnet, mittels dem verhindert wird, dass die Teile seitlich herunterfallen.

In diesen Positionen werden die gerichteten Schüttgut-Teile 17, 18, 19 sodann fotografisch geortet und ihre x- und y-Koordinaten in Bezug auf ihren Schwer- oder einen Bezugspunkt und ihre Ausrichtung der von der Auflagefläche 20' des Plattenelementes 20 gebildeten Ebene erfasst und durch die Steuerung ausgewertet und gespeichert.

Vorteilhaft ist das Plattenelement 20 zumindest transparent oder ganz durchsichtig ausgebildet, damit die darauf befindlichen Schüttgut-Teile 17, 18, 19 von einer Kamera 26 via einen mit dieser zusammenwirkenden Reflektor 27 unterhalb des Plattenelementes 20 geortet werden können. Durch diese transparente oder durchsichtige Ausbildung des Plattenelementes 20 kann die Kamera 26 zumindest die Unterseiten der Teile 17, 18, 19 durch ein Bild festhalten, durch welches ihre Lagepositionen jeweils in Bezug auf die x-, y- und bei Bedarf die z-Koordinate sowie die Ausrichtung der vom Plattenelement gebildeten Ebene bestimmt werden können.

Dieser als Spiegel vorgesehene Reflektor 27 ist im Gehäuse 25 unterhalb des Plattenelementes 20 in einem Winkel zu diesem befestigt und ist zu der seitlich beim Plattenelement 26 platzierten Kamera 26 so angeordnet, dass eine oder mehrere digitale Bilder wie annähernd von senkrecht unterhalb des Plattenelementes 26 aufgenommen werden, so dass daraus die x- und y-Koordinaten und die Ausrichtung der Teile genau festgelegt werden können.

Der Manipulator 30, wie in Fig. 1 ersichtlich ist, weist einen im Gehäuse 25 in Längs- und in Vertikalrichtung gelagerten Führungskopf 33, einen in diesem integrierten steuerbaren Drehmotor 31 für den schwenkbaren Greifer 35 auf, der parallel zum Plattenelement 20 bewegbar ist. Der Führungskopf 33 ist dabei durch eine Führungsstange 34, die vorzugsweise als eine Gewindespindel ausgebildet ist, seitlich oberhalb des Plattenelementes 20 innerhalb des Gehäuses 25 verschiebbar gelagert.

Der schwenkbare Greifer 35 des Manipulators 30 ist somit einerseits vom Führungskopf 33 entlang des Plattenelementes 20 verschiebbar und durch seine Verschwenkbarkeit in eine beliebige Position oberhalb des Plattenelementes 20 bringbar und andererseits an eine bestimmte Stelle neben dem Plattenelement 20 zum Positionieren der Schüttgut-Teile 17, 18, 19 für deren Weiterverarbeitung oder Ablage in einer Box oder dergleichen bewegbar, wie dies in Fig. 6 angedeutet ist.

Mit der Anordnung des Manipulators 30 und seines Greifers 35 seitlich oberhalb des Plattenelementes ist eine optimale Raumzuordnung zusammen mit der Kamera 26 und dem Reflektor 27 unterhalb und der Fördereinrichtung 12 seitlich des Plattenelementes 20 erzielt worden.

Der Manipulator 30 und damit der Greifer 35 werden durch die elektronische Steuerung entsprechend angesteuert und in die fotografisch erfasste Position der Schüttgut-Teile 17, 18, 19 geführt, so dass der Greifer 35 ein jeweiliges Teil durch Greiffinger oder durch einen Saugnapf oder dergleichen fasst und anschliessend in die Ablageposition fördert. Die Bestimmung der x-, y- und bei Bedarf der z-Koordinate sowie die Ausrichtung der Teile erfolgt in der Weise, dass der Greifer 35 richtig positioniert ist und seine Greiffinger das jeweilige Teil aussen fassen und nicht oben am Teil anstehen.

Mit Vorteil ist ein nicht gezeigtes Messelement im Manipulator 30 oder im Gehäuse 25 angeordnet, mittels dem kontrolliert wird, ob der Greifer 35 effektiv ein Schüttgut-Teil gefasst und abgelegt hat.

Mit Vorteil werden nur eine begrenzte Anzahl von Schüttgut-Teilen 17, 18, 19, vorzugsweise zwischen 3 und 10 Teilen, diskontinuierlich von der Fördereinrichtung 12 auf das Plattenelement 20 zugeführt. Je nach Anwendung könnte im Prinzip die Zufuhr der Teile auch quasi kontinuierlich auf das Plattenelement 20 erfolgen. Es müsste dann entsprechend das Verteilen durch die Impulse und das Erfassen der Teile aufeinander abgestimmt werden. Sobald diese Teile 17, 18, 19 durch den wenigstens einen Impuls auf dem Plattenelement 20 ausgerichtet sind, werden sie anschliessend vom Manipulator 30 gefasst und entfernt, und dies dann wiederholt wird, bis eine bestimmte Anzahl von Teilen neben Plattenelement abgelegt sind oder es werden kontinuierlich Teile abgelegt.

Das Gerät 10 ist aus Sicherheitsgründen an sich vom Gehäuse 25 umschlossen und im Betrieb nicht von aussen zugänglich.

Die Erfindung ist mit den oben erläuterten Ausführungsbeispiel ausreichend dargetan. Sie könnte selbstverständlich noch durch weitere Varianten erläutert sein. So könnte beispielsweise mehr als ein Manipulator beispielsweise beidseitig oberhalb des Plattenelementes je einer vorgesehen sein, um die Förderleistung quasi zu verdoppeln.

Bei der Fördereinrichtung könnte selbstverständlich auch anstelle eines Plattenförderers ein eben oder schräg nach oben laufendes Förderband, ein Rüttelförderer oder dergleichen verwendet werden. Das Plattenelement könnte auch nur durch einen oder zwei Verstellmechanismen abgestützt sein.

Auch könnte anstelle einer Kamera ein Zeilenscanner, ein Scanner oder ähnliches in dem erfindungsgemässen Gerät integriert sein und die jeweiligen Positionen der Teile erfassen und lokalisieren. Ein solcher Scanner könnte unterhalb des Plattenelementes als hin- und herbewegter Schlitten mit entsprechenden Mess-Sensoren realisiert sein.

## Patentansprüche

1. Verfahren zum Fördern von Schüttgut-Teilen, bei dem die Schüttgut-Teile (17, 18, 19) in einer dosierten Menge auf wenigstens ein Plattenelement (20) mit einer Auflagefläche (20') befördert und zum Ordnen durch eine annähernd senkrecht zu seiner Auflagefläche (20') gerichtete Bewegung von diesem abgehoben werden, **dadurch gekennzeichnet, dass**
das Plattenelement (20) zumindest annähernd senkrecht zu seiner Auflagefläche (20') durch wenigstens zwei aufeinanderfolgende Impulse auf- und abbewegt wird, so dass die auf dem Plattenelement (20) befindlichen Schüttgut-Teile (17, 18, 19) beim jeweiligen Impuls von diesem kurzzeitig abgehoben werden, wobei bei den zumindest zwei aufeinanderfolgenden Impulsen ein solches Zeitintervall zwischen den beiden Impulsen gewählt wird, dass die Schüttgut-Teile (17, 18, 19) unmittelbar nach dem ersten Impuls beim Auftreffen auf dem Plattenelement (20) durch den zweiten Impuls wieder von diesem abgehoben werden.

2. Verfahren nach Anspruch 1, **dadurch gekennzeichnet, dass**
der Hub und die Impulszeitdauer der Bewegungen des Plattenelementes (20) bei einem jeweiligen Impuls in Abhängigkeit zumindest des Gewichtes und vorzugsweise der Aussenform der Schüttgut-Teile (17, 18, 19) festgelegt werden, wobei die Einstellungen und das Ausführen der Impulsbewegungen des Plattenelementes (20) durch eine elektronische Steuerung erfolgen.

3. Verfahren nach Anspruch 1 oder 2, **dadurch gekennzeichnet, dass** der eine und vorzugsweise die zwei Impulsbewegungen durch wenigstens einen elektromagnetisch wirkenden Verstellmechanismus (22) erzeugt werden, bei dem der Verstellhub ca. 0.1 bis einige Millimeter beträgt und dies bei einer jeweiligen Impulszeitdauer von Sekundenbruchteilen erfolgt.

4. Verfahren nach einem der Ansprüche 1 bis 3, **dadurch gekennzeichnet, dass**
die Schüttgut-Teile (3) nach dem durch die Impulse bewirkten kurzzeitigen Abheben nebeneinander auf dem Plattenelement (20) liegen und sodann fotografisch geortet und dabei ihre Positionen jeweils zumindest in Bezug auf die x- und y-Koordinaten und ihre Ausrichtung der vom Plattenelement (20) gebildeten Ebene erfasst und durch eine elektronische Steuerung ausgewertet werden, und diese für einen Greifer (35) eines Manipulators (30) als Positionswerte dienen.

5. Verfahren nach einem der Ansprüche 1 bis 4, **dadurch gekennzeichnet, dass**
das Plattenelement (20) zumindest transparent durchsichtig ist und die Aussenkonturen der oberhalb vom Plattenelement (20) liegenden Schüttgut-Teile (17, 18, 19) nach den erfolgten Impulsen unterseitig fotografisch erfasst und daraus die x- und y-Koordinaten der jeweiligen Positionen und die Ausrichtung derselben bestimmt werden.

6. Verfahren nach einem der Ansprüche 1 bis 5, **dadurch gekennzeichnet, dass**
eine begrenzte Anzahl von Schüttgut-Teilen (3), beispielsweise zwischen 3 und 10 Teilen, diskontinuierlich auf das Plattenelement (20) zugeführt werden, welche dann durch den wenigstens einen Impuls ausgerichtet und anschliessend vom Plattenelement entfernt werden, und dies dann wiederholt wird, bis eine bestimmte Anzahl von Teilen neben Plattenelement (20) abgelegt sind oder eine kontinuierliche Ablage erfolgt.

7. Gerät zur Durchführung des Verfahrens nach einem der Ansprüche 1 bis 6, mit einem Plattenelement und einer Auflagefläche, **dadurch gekennzeichnet, dass**
das Plattenelement (20) auf wenigstens einem elektromagnetisch wirkenden Verstellmechanismus (22) abgestützt ist, der derart ausgebildet ist, dass mit ihm die vorzugsweise zwei Impulse erzeugbar sind, wobei dieser Verstellmechanismus (22) mit einer elektronischen Steuerung für die Einstellung und das Ausführen der Impulsbewegungen verbunden ist.

8. Gerät nach Anspruch 7, **dadurch gekennzeichnet, dass**
der Verstellmechanismus (22) vorzugsweise vier aussenseitig das Plattenelement (20) abstützende Hubbolzen (23) und diese umgebende Magnetspulen (24) aufweist, welche durch elektrischen Strom beaufschlagt werden, um die Hubbolzen (23) und damit das Plattenelement (20) impulsartig mit einem Hub hochzubewegen.

9. Gerät nach Anspruch 7 oder 8, **dadurch gekennzeichnet, dass**
das Gerät (10) einen Einfüllbehälter (11) für die Aufnahme des Schüttgutes, eine mit diesem zusammenwirkende Fördereinrichtung (12), dieses Plattenelement (20) mit dem Verstellmechanismus (22), wenigstens einen Manipulator (30) mit einem oberhalb des Plattenelementes (20) verstellbaren Greifer (35) sowie eine elektronische Steuerung für das Steuern des Förderns des Schüttgutes umfasst.

10. Gerät nach Anspruch 9, **dadurch gekennzeichnet, dass**
der Manipulator (30) über dem Plattenelement (20) angeordnet ist, wobei er einen seitlich oberhalb des Plattenelementes in Längs- und in Vertikalrichtung gelagerten Führungskopf (33) mit einem Greifer (35) aufweist, welcher in x- und y-Richtung durch einen Drehmotor parallel zum Plattenelement schwenkbar ist.

11. Gerät nach Anspruch 10, **dadurch gekennzeichnet, dass**
der schwenkbare Greifer (35) des Manipulators (30) einerseits vom Führungskopf (33) entlang des Plattenelementes (20) verschiebbar und durch seine Verschwenkbarkeit in eine beliebige Position oberhalb des Plattenelementes verfahrbar und andererseits an eine bestimmte Stelle neben dem Plattenelement (20) zum Ablegen der Schüttgut-Teile (17, 18, 19) für die Weiterverarbeitung schwenkbar ist.

12. Gerät nach einem der Ansprüche 7 bis 11, **dadurch gekennzeichnet, dass**
das Plattenelement (20) zumindest transparent durchsichtig ist, damit die darauf befindlichen Schüttgut-Teile von mindestens einer Kamera (26) direkt oder via wenigstens einen mit dieser zusammenwirkenden Reflektor (27) unterhalb des Plattenelementes (20) geortet und dabei ihre Positionen jeweils zumindest in Bezug auf die x- und y-Koordinaten und die Ausrichtung der vom Plattenelement gebildeten Ebene erfassbar sind.

## Claims

1. Method for conveying bulk materials, with which the bulk materials (17, 18, 19) are conveyed in a metered quantity onto at least one plate element (20) with a contact surface (20'), and are lifted up from the plate element in order to organize them by a movement oriented approximately perpendicularly to its contact surface (20'), **characterized in that**
the plate element (20) is moved up and down at least approximately perpendicularly to its contact surface (20') by means of at least two sequential pulses, such that the bulk materials (17, 18, 19) located on the plate element (20) are lifted up from the plate element for a short time during each pulse, whereby with the at least two sequential pulses, such a time interval is selected between the two pulses that the bulk materials (17, 18, 19) located on the plate element (20), are lifted from it again, immediately after the first pulse, by the second pulse.

2. Method according to claim 1, **characterized in that**
the lift and the pulse duration of the movements of the plate element (20) at a respective pulse, are determined as a dependency at least of the weight and preferably of the outer shape of the bulk materials (17, 18, 19), wherein the adjustment and performance of the pulse movements of the plate element 20 take place by means of an electronic control device.

3. Method according to claim 1 or 2, **characterized in that**
the one and preferably the two pulse movements are generated by at least one electromagnetic adjustment mechanism (22), with which the adjustment lift amount to approx. 0.1 to several millimetres, and this takes place with a respective pulse duration of fractions of a second.

4. Method according to any one of claims 1 to 3, **characterized in that**
after the short lifting caused by the pulses, the bulk materials (3) lie next to one another on the plate element (20), and are then photographically detected, and in this situation their positions are detected, in each case at least in relation to the x-co-ordinates and y-co-ordinates, and their orientation in relation to the plane formed by the plate element (20), and evaluated by an electronic control device, and these details serve as position values for a gripper (35) of a manipulator (30).

5. Method according to any one of claims 1 to 4, **characterized in that**
the plate element (20) is at least see-through transparent, and the outer contours of the bulk materials (17, 18, 19) lying above the plate element (20) are photographically detected from the under side after the pulses have been carried out, and from this the x-co-ordinates and y-co-ordinates of the respective positions and their alignment are determined.

6. Method according to any one of claims 1 to 5, **characterized in that**
a limited number of bulk materials (3), for example between 3 and 10 materials, are delivered discontinuously onto the plate element (20), which are then aligned by the at least one pulse and then removed from the plate element, until a specific number of materials are deposited next to the plate element (20), or continuous depositing takes place.

7. Device for carrying out the method according to any one of claims 1 to 6, with a plate element and a contact surface, **characterized in that**
the plate element (20) is supported on at least one electromagnetically operating adjustment mechanism (22), which is configured in such a way that preferably two pulses can be generated with it, whereby this adjustment mechanism (22) is connected to an electronic control device for the adjustment and carrying out of the pulse movements.

8. Device according to claim 7, **characterized in that**
the adjustment mechanism (22) comprises preferably four lifting bolts (23) supporting the plate element (20) on the outside, and magnetic coils (24) surrounding these, which are subjected to electric current in order to lift the lifting bolts (23), and therefore the plate element (20) in the form of a pulse with one lift.

9. Device according to claim 7 or 8, **characterized in that**
the device (10) comprises a filling container (11) for receiving the bulk materials, a conveying device (12) interacting with this, this plate element (20) with the adjustment mechanism (22), at least one manipulator (30) with an adjustable gripper (35) above the plate element (20), and an electronic control device for controlling the conveying of the bulk materials.

10. Device according to claim 9, **characterized in that**
the manipulator (30) is arranged above the plate element (20), wherein it comprises a guide head (33), mounted laterally above the plate element in the longitudinal and vertical direction, with a gripper (35) which can be pivoted by a rotary motor parallel to the plate element in the x-direction and y-direction.

11. Device according to claim 10, **characterized in that**
on the one hand, the pivotable gripper (35) of the manipulator (30) can be moved by the guide head (33) along the plate element (20), and, due to its pivoting capability, it can be moved into any desired position above the plate element, and, on the other hand, it can be pivoted to a specific point next to the plate element (20) in order to deposit the bulk materials (17, 18, 19) for further processing.

12. Device according to any one of claims 7 to 11, **characterized in that**
the plate element (20) is at least see-through transparent, in order for the bulk materials located on it to be detected by at least one camera (26), directly or via at least one reflector (27) beneath the plate element (20) interacting with the camera, and in this situation their positions can be detected in each case at least in relation to the x-co-ordinates and y-co-ordinates and the orientation of the plane formed by the plate element.

## Revendications

1. Procédé de transport de pièces en vrac, dans lequel on transporte les pièces (17, 18, 19) en vrac en une quantité dosée sur au moins un élément (20) en forme de plaque ayant une surface (20') de support et, pour les ordonner par un mouvement dirigé à peu près perpendiculairement à sa surface (20') de support, on les en soulève, **caractérisé en ce que**
on met et on éloigne l'élément (20) en forme de plaque au moins à peu près perpendiculairement à sa surface (20') de support, par au moins deux impulsions successives, de manière à ce que les pièces (17, 18, 19) en vrac, se trouvant sur l'élément (20) en forme de plaque, en soient soulevées brièvement à chaque impulsion, dans lequel on choisit, pour les au moins deux impulsions successives, un intervalle de temps tel entre les deux impulsions que les pièces (17, 18, 19) en vrac, immédiatement après la première impulsion, à l'arrivée sur l'élément (20) en forme de plaque, en soient resoulevées par la deuxième impulsion.

2. Procédé suivant la revendication 1, **caractérisé en ce que** l'on fixe la course et la durée d'impulsion des mouvements de l'élément (20) en forme de plaque pour une impulsion respective en fonction d'au moins le poids, de préférence la forme extérieure des pièces (17, 18, 19) en vrac, le réglage et la réalisation des mouvements d'impulsion de l'élément (20) en forme de plaque s'effectuant par une commande électronique.

3. Procédé suivant la revendication 1 ou 2, **caractérisé en ce que**
l'on produit le un, de préférence les deux mouvements d'impulsion, par au moins un mécanisme (22) de réglage à effet électromagnétique, dans lequel la course de déplacement est d'environ 0,1 à quelques millimètres et cela s'effectue pour une durée d'impulsion respective de fractions de seconde.

4. Procédé suivant l'une des revendications 1 à 3, **caractérisé en ce que**
les pièces (3) en vrac reposent sur l'élément (20) en forme de plaque les unes à côté des autres, après le soulèvement de courte durée provoqué par les impulsions et on les localise ensuite photographiquement et on détecte ainsi leurs positions respectivement au moins par rapport aux coordonnées x et y et l'orientation par rapport au plan formé par l'élément (20) en forme de plaque et on les analyse par une commande électronique et celles-ci servent à un outil (35) de préhension d'un manipulateur (30) comme valeurs de position.

5. Procédé suivant l'une des revendications 1 à 4, **caractérisé en ce que**
l'élément (20) en forme de plaque est au moins transparent et on détecte photographiquement par le bas, après avoir effectué les impulsions, les contours extérieurs des pièces (17, 18, 19) en vrac se trouvant au-dessus de l'élément (20) en forme de plaque et on en détermine les coordonnées x et y des positions respectives et l'orientation de celui-ci.

6. Procédé suivant l'une des revendications 1 à 5, **caractérisé en ce que**
l'on apporte un nombre limité de pièces (3) en vrac, par exemple entre 3 et 10 pièces, d'une manière discontinue sur l'élément (20) en forme de plaque, que l'on oriente ensuite par la au moins une impulsion et que l'on retire ensuite de l'élément en forme de plaque et l'on répète cela jusqu'à ce qu'un nombre déterminé de pièces soient déposées à côté de l'élément (20) en forme de plaque ou on effectue un dépôt continu.

7. Appareil pour effectuer le procédé suivant l'une des revendications 1 à 6, **caractérisé en ce que**
l'on soutient l'élément (20) en forme de plaque sur au moins un mécanisme (22) de réglage à effet électromagnétique, qui est constitué de manière à pouvoir produire par lui, les, de préférence deux, impulsions, dans lequel ce mécanisme (22) de réglage est relié à une commande électronique pour le réglage et l'exécution des mouvements d'impulsion.

8. Appareil suivant la revendication 7, **caractérisé en ce que** le mécanisme (22) de réglage a, de préférence quatre axes (23) élévateurs soutenant, du côté extérieur, l'élément (20) en forme de plaque et des bobines (24) d'électroaimant les entourant, bobines, qui sont alimentées par du courant électrique, afin de soulever, par une course du type à impulsions, les axes (23) élévateurs et ainsi l'élément (20) en forme de plaque.

9. Appareil suivant la revendication 7 ou 8, **caractérisé en ce que**
l'appareil (10) comprend un récipient (11) de remplissage pour la réception du produit en vrac, un dispositif (12) de transport coopérant avec celui-ci, cet élément (20) en forme de plaque avec le mécanisme (22) de réglage, au moins un manipulateur (30) avec un outil (35) de préhension réglable au-dessus de l'élément (20) en forme de plaque, ainsi qu'une commande électronique pour la commande du transport du produit en vrac.

10. Appareil suivant la revendication 9, **caractérisé en ce que** le manipulateur (30) est disposé au-dessus de l'élément (20) en forme de plaque, dans lequel il a une tête (33) de guidage montée latéralement au-dessus de l'élément en forme de plaque dans la direction longitudinale et dans la direction verticale avec un outil (35) de préhension, qui peut pivoter parallèlement à l'élément en forme de plaque par un moteur rotatif dans la direction x et y.

11. Appareil suivant la revendication 10, **caractérisé en ce que**
l'outil (35) de préhension pivotant du manipulateur (30) peut être déplacé d'une part par la tête (33) de guidage le long de l'élément (20) en forme de plaque et peut, par sa possibilité de pivoter, être mis dans une position quelconque au-dessus de l'élément en forme de plaque et, d'autre part, peut être pivoté en une position déterminée à côté de l'élément (20) en forme de plaque pour le dépôt des pièces (17, 18, 19) en vrac en vue du traitement ultérieur.

12. Appareil suivant l'une des revendications 7 à 11, **caractérisé en ce que**
l'élément (20) en forme de plaque est au moins transparent, afin que les pièces en vrac s'y trouvant puissent être localisées par au moins une caméra (26) directement ou par l'intermédiaire d'au moins un réflecteur (27) coopérant avec celle-ci en dessous de l'élément (20) en forme de plaque et qu'ainsi puissent être détectées leurs positions respectivement au moins par rapport aux coordonnées x et y et la direction du plan formé par l'élément en forme de plaque.
